# EUROPEAN PATENT APPLICATION

(11) **EP 4 790 427 A1**
(43) Date of publication of application: **12.08.2026**
(21) Application number: 26152696.6
(22) Date of filing: 19.01.2026
(51) Int. Cl.: G01P 5/26, B64D 45/00, G01S 7/497, G01P 1/02, G01P 21/02

(54) **WINDOW COVERING SYSTEM TO AN OPTICAL HEAD OF AN OPTICAL AIR DATA SYSTEM**

(30) Priority: 11.02.2025 US 202519050575
(71) Applicant: Honeywell International Inc., Charlotte, NC 28202 (US)
(72) Inventor: DOBBINS, Thomas, Charlotte, 28202 (US); DRASAL, Zbynek, Charlotte, 28202 (US)
(74) Representative: Haseltine Lake Kempner LLP

(57) **Abstract**

A system to cover a window to an optical head of an optical air data system is provided. The system includes a cover, actuator, and controller. The cover includes an inside surface that is configured to at least direct reflected light beams to a desired location of the optical head. The cover is configured to selectively cover the window to the optical head to the optical air data system. The actuator is engaged to move the cover to selectively cover and uncover the window. The controller controls the actuator. The controller is configured to selectively position the cover to cover at least part of the window during one of a calibration of the optical air data system as well as when a vehicle that includes the optical head is within a safety concern zone.

## Description

### BACKGROUND

Avionic vehicles, such as fixed-wing aircraft, rotor-craft etc., and corresponding flight control avionics rely in navigation on several key sensor inputs, one of which is the information from traditional pitot-static system such as pneumatic sensors. Such data, denoted as air-data, is used to evaluate the aircraft-to-airstream flight conditions/status, and are critical for flight-control and situational awareness. Air-data may include true/computed/indicated airspeed (TAS/CAS/IAS), angle-of-attack/side-slip (AoA/AoS), static/total air temperature (SAT/TAT), pressure altitude (H) and Mach number (M). The traditional approach by pitot-probes, however, suffer from characteristic failure modes, which historically has led to several serious flight accidents.

Further, the use of pitot probes to gather air-data has limitations. The limitations may arise from a sensitivity to aircraft aerodynamic boundary layer effects, a sensitivity of engine thrust effects as well as a sensitivity to direct sun exposure. These sensitivity limitations may lead to a systematic bias in air-data evaluation that will need to be corrected by calibration. Other limitations of pitot probes used to gather air-data includes a lower accuracy at low-speed that may affect continuity and availability of air-data. Further, ice formation in-flight/on-ground and accidental mechanical on-ground covering of pitot probes may result with a blocking effect of pitot-static sensors leading to a potential risk of in-flight failure.

The limitation of pitot probes may be significantly mitigated by integrating dissimilar technology to determine air-data in an aircraft. One type of dissimilar technology being developed to gather air-data is an optical air-data system. An optical air-data system generally includes a laser to generate light beams that are transmitted through a window of an aircraft into the atmosphere around the aircraft by a transmitter in an optical head. The light beams scatter off of particles in the atmosphere. Some of the scattered light beams are received at a receiver in the optical head. A detector detects the received light beams. The received light beams are compared to the transmitted light beams in determining air-data that can be used by the aircraft. Any developed optical air-data system needs to be robust and accurate with a stable laser source for the system to become certified for use in an aircraft.

For the reasons stated above and for other reasons stated below which will become apparent to those skilled in the art upon reading and understanding the present specification, there is a need in the art for an effective and efficient operating optical air-data system.

### SUMMARY

The following summary is made by way of example and not by way of limitation. It is merely provided to aid the reader in understanding some of the aspects of the subject matter described. Embodiments provide an optical head cover system for an optical air data system to protect a window to the optical head when not in use, to protect the eyes of individuals near a vehicle that includes the optical head and provides a calibration surface used in conducting a calibration of the optical air data system.

In one embodiment, a system to cover a window to an optical head of an optical air data system is provided. The system includes a cover, actuator, and controller. The cover includes an inside surface that is configured to at least direct reflected light beams to a desired location of the optical head. The cover is configured to selectively cover the window to the optical head to the optical air data system. The actuator is engaged to move the cover to selectively cover and uncover the window. The controller controls the actuator. The controller is configured to selectively position the cover to cover at least part of the window during one of a calibration of the optical air data system as well as when a vehicle that includes the optical head is within a safety concern zone.

In another embodiment, a system to operate a cover of window of a vehicle is provided. The system includes an optical air data system, a cover and at least one controller. The optical air data system includes a laser to generate light beams and an optical head. The optical head is configured to transmit transmitted light beams and receive received light beams through the window. The cover includes an inside surface that is configured to at least in part reflect the transmitted light beams to a desired location of the optical head. The at least one controller is configured to conduct a calibration process of the optical air data system when the cover is positioned to cover the window to the optical head.

In yet another embodiment, a method of covering a window of a vehicle is provided. The method includes monitoring for an event that indicates one of a desire to calibrate an optical air data system and to cover the window for safety concerns; and automatically at least in part covering the window when the event has been detected that indicates one of the desire to calibrate the optical air data system and when the vehicle is within a safety concern zone.

### BRIEF DESCRIPTION OF THE DRAWINGS

The present invention can be more easily understood and further advantages and uses thereof will be more readily apparent, when considered in view of the detailed description and the following figures in which:
Figure 1A illustrates a block diagram of a window covering system to cover a window to an optical head of an optical air data system according to an example aspect of the present invention;
Figure 1B illustrates a block diagram of the window covering system to cover a window to an optical head of an optical air data system of Figure 1A with the cover moving into a closed position;
Figure 1C illustrates a block diagram of the window covering system to cover a window to an optical head of an optical air data system of Figure 1A with the cover in a closed position;
Figure 2 illustrates a block diagram of a vehicle that includes a window covering system to cover a window to an optical head of an optical air data system during a calibration process according to an example aspect of the present invention;
Figure 3 illustrates an event cover operation flow diagram according to an example aspect of the present invention; and
Figure 4 illustrates a calibration flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a window covering system to cover a window to an optical head of an optical air data system. In embodiments, a cover selectively covers a window to an optical head of the optical air data system. Further in some embodiments, the covering of the window to the optical head with the cover automatically occurs upon the detection of an event. In one embodiment, an inside surface of the cover is used to calibrate the optical air data system. In an embodiment, the cover is used to prevent transmitted light beams from exiting a vehicle when the vehicle is in a safety concern zone to prevent damage to eyes of individuals from the transmitted light beams that are within the safety concern zone of the vehicle.

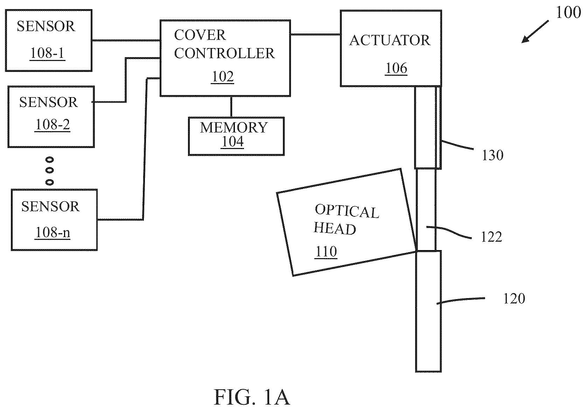

Figure 1A illustrates a block diagram of a window covering system 100 to cover a window to an optical head of an optical air data system. The window covering system 100 to cover a window to an optical head of an optical air data system in this example, includes a cover controller 102, memory 104, an actuator 106, a cover 130 and a plurality of sensors 108-1 through 108-n.

In general, the cover controller 102 may include any one or more of a processor, microprocessor, a digital signal processor (DSP), an application specific integrated circuit (ASIC), a field program gate array (FPGA), or equivalent discrete or integrated logic circuitry. In some example embodiments, cover controller 102 may include multiple components, such as any combination of one or more microprocessors, one or more controllers, one or more DSPs, one or more ASICs, one or more FPGAs, as well as other discrete or integrated logic circuitry. The functions attributed to the cover controller 102 herein may be embodied as software, firmware, hardware or any combination thereof. The cover controller 102 may be part of a system controller or a component controller. Memory 104 may include computer-readable operating instructions that, when executed by cover controller 102 provides functions of the window covering system 100 to cover a window to the optical head of the optical air data system. Such functions may include the functions of controlling the opening and closing of the cover 130 as described below. The computer readable instructions may be encoded within the memory. Memory is an appropriate non-transitory storage medium or media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The actuator 106 is engaged to selectively move the cover 130 to selectively cover and uncover the window 122 to the optical head 110. The actuator 106 is controlled by the controller 102 in this example. The cover controller 102, based on the operating instructions stored in the memory 104 and sensor information from sensors 108-1 through 108-n, directs the actuator 106 to position the cover 130 in a desired location relative to the window 122 to selectively cover or expose the window 122.

The plurality of sensors, generally identified by sensor 108, may include for example, a weight-on-wheel (WOW) sensor, speed sensor, altitude sensor, location sensor, a switch. In one example, the sensors 108 may include LiDAR integrated sensors. For example, an integrated LiDAR sensor may be used to recognize a signal by back reflection from the ground and logic implemented, by either the cover controller 102 or the optical laser controller 214 discussed below. In this example it may be decided to either decrease laser power or close the cover 130 based on an output of one or more LiDAR sensors. Further in examples, a combination of LiDAR sensors and aircraft external sensors are used. Sensor 108 may sense an aspect associated with a vehicle to indicate an event has occurred that the cover controller 102 monitors for in controlling the actuator 106. For example, a WOW sensor may provide an indication, or event, to the cover controller 102 that an aircraft is on the ground. It may be desired to have the cover 130 cover the window 122 when the aircraft is on the ground to prevent debris from gathering on the window or to protect the window 122 from other factors when the aircraft is on the ground. Further, it may be desired to cover the window when the aircraft is on or near the ground to prevent laser light beams generated from the optical head 110 from being radiated out from the aircraft. This may be desired to protect the eyes of individuals, including airport workers, that work at or near airports.

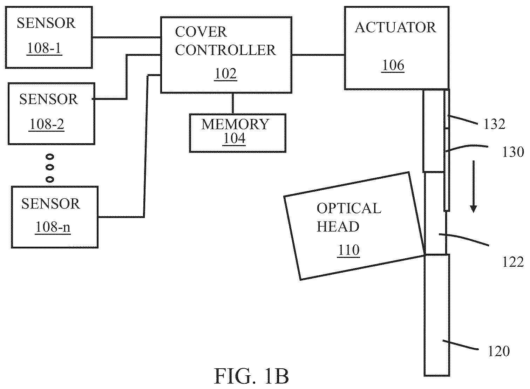

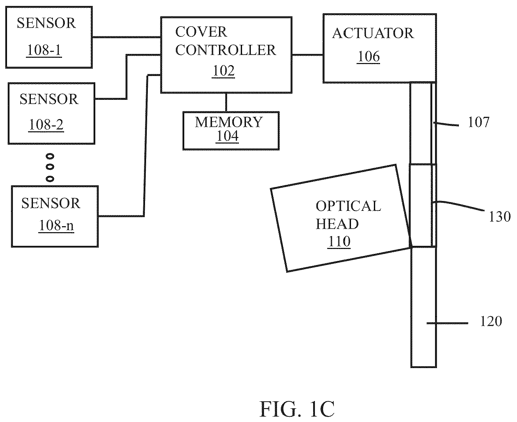

In the example illustrated in Figure 1A, the cover 130 is retained within an outer surface 120 (shell) of an aircraft. In Figure 1A, cover 130 is positioned away from the window 122 (opened position). Figure 1B illustrates the cover 130 being moved by an actuator member 107 of the actuator 106 to cover window 122. This may occur in response to an event provided by a sensor 108. Figure 1C illustrates the cover 130 being positioned to cover the window 122 (closed position). In this configuration, transmitted light beams from the optical head 110 are prevented from leaving an associated vehicle.

As discussed above, an example of a situation where it may be desired to cover window 122 is to prevent laser light beams, that are being radiated by the optical head, from being transmitted outside of the aircraft when the aircraft is on the ground or near the ground to protect the eyes of individuals on the ground. In this example, a safety concern zone (a distance from the vehicle) in which the laser beams generated by the optical head may cause damage to an individual's eyes and/or skin may be established. Examples of where safety concern zones may be established are around airports within select distances to the ground, tarmac, terminal, hanger etc. The distance of a safety concern zone is determined at least in part by the strength of the laser beams transmitted by the optical head. Entering into a safety concern zone may initiate a safety event that covers the windows. Determining if an aircraft is within a safety concern zone may be done with the use of sensors such as a WOW sensor, an altitude sensor, a location sensor, etc. to find the location of aircraft and comparing the location of the aircraft with a map of the safety concern zone locations stored in memory 104.

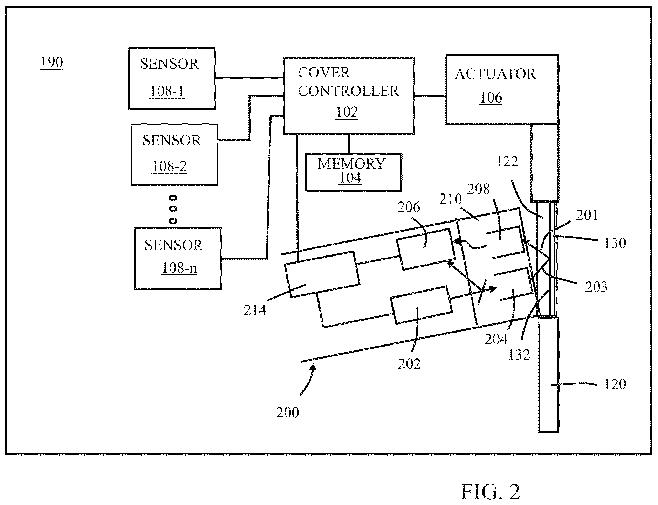

Another example, where it is desired to cover the window 122 is during a calibration of the optical head 110. For example, Figure 2 illustrates a vehicle 190 that includes a window covering system to cover a window 122 to an optical head 210 of an optical air data system 200 that can perform a calibration of the optical air data system 200. Optical heads of optical air data systems may need to be calibrated periodically. A calibration event may be generated by a sensor 108 or manually triggered by a switch sensor. In calibration embodiments, an inside surface 132 of the cover 130 is designed to reflect a light beam generated by the optical head 110 back to the optical head 110. The reflective inside surface 132 may include a mirrored surface or a scattered surface configured to reflect light beams. Further in other example embodiments, the inside surface 132 of the cover 130 may include absorbing material to absorb the transmitted light beams. Further still, the inside surface 132 of the cover, in yet another example, may include a complex optic system, such as but not limited to, a set of prisms.

The optical head 210 in this example includes an optical laser controller 214, a laser 202 and an interferometer 206. The optical air data system 200 may include a feedback loop used at least in part to control operations of the laser 202. Adjustments to the laser 202 made by the optical laser controller 214 may include frequency and power of generated laser beams. Optical head 210 further includes an optical transmitter 204 to transmit light beams generated by the laser 202 and an optical receiver 208 to receive reflected light beams. In the calibration example, transmitted light beams 203 transmitted by the optical transmitter 204 are reflected off the inside surface 132 of the cover 130. The reflected light beams 201 are received by the optical receiver 208. The received light beams are then processed by the interferometer 206 and the optical laser controller 214. The optical laser controller 214 calibrates (adjust an output of the laser 202) of the optical head 210 based on the processing of the received reflected light beams 201. In one example, the cover controller 102 is in communication with the optical laser controller 214 to time the calibration with the cover 130 being in the closed position. Calibration would typically be done while the vehicle 190, such as an aircraft, is on the ground.

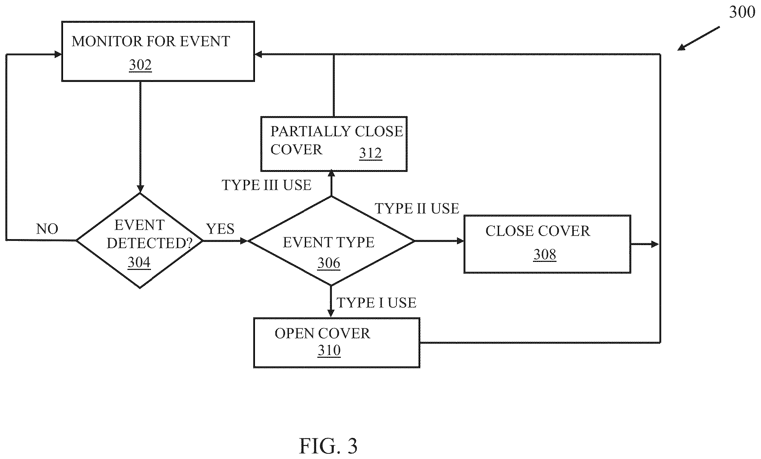

A method of selectively covering the window 122, in an example, is illustrated in an event cover operation flow diagram 300 of Figure 3. The event cover operation flow diagram 300 of Figure 3 is provided as a series of sequential blocks. In one example, cover controller 102 implementing the operating instructions stored in the memory 104 automatically enables, at least in part, the operations described in the blocks of the event cover operation flow diagram 300 of Figure 3. The sequence of blacks may occur in a different order or even in parallel in other embodiments. Hence, the present invention is not limited to the sequential sequence of blocks set out in Figure 3.

The event cover operation flow diagram 300 of the example of Figure 3 starts at block 302 monitoring for an event. If it is determined an event has not been detected at block 302, the process continues monitoring for an event. Examples of events may include but are not limited to, an event that indicates a desire to calibrate an optical head behind the window and an event that indicates a safety concern.

If it is determined at block 304 that an event has been detected, the event type is then determined at block 306 in an example. If it is determined to be a type I event, the cover 130 is moved away from the window 122 (open cover) at block 310. This type of event may be an event that indicates the window covering system 100 to cover a window to an optical head of an optical air data system is about to start operations so the cover 130 needs to be removed from the window 122 or that the vehicle has moved outside a safety concern zone. Sensor outputs that may be used to determine a type I event may be provided by, but are not limited to, a WOW sensor, a location sensor, an activation of a switch, a speed sensor, an altitude sensor, etc.

If it is determined at block 306 the event type is a type II event, the cover 130 is positioned to cover the window 122 (close cover) at block 308. This type of event is an event that indicates the window 122 should be covered. This may occur when an aircraft is on the ground, when the optical head needs to be calibrated, to prevent inadvertent discharge of laser beam radiation outside the aircraft, to prevent debris from hitting the window when the vehicle is not in use, etc. Sensor outputs that may be used to determine a type II event include, but are not limited to, a WOW sensor, an activation of a switch, a speed sensor, an altitude sensor, a location sensor, etc. In a safety event example, the event detected block 304 may include comparing a location of the aircraft with location of safety concern zones stored in a memory.

In another example, it may be determined at block 306 that the event type is a type III event. In a type III event, the cover 130 is placed in a partially closed configuration so the window is partially covered. For example, the optical air-data system may include four channels with two channels being directed downwards with one forward looking and one backward looking and two channels directed upward with one forward looking and one backward looking. The partially closed configuration may cover at least some of the channels while the remaining channels remain uncovered and able to transmit laser signals away from the aircraft. The partially closed configuration may be used, if it is desired, to calibrate some transmit channels of the optical air data system while the remaining channels are being used to collect air-data. Further in an example, the cover 130 may cover the downward directed channels to protect the eyes/skin of the individuals during ground testing. Further, in another example, during take-off and/or landing phases of the aircraft the downward channels may be blocked to prevent hard-target reflection (i.e., reflection from ground back to the optical head of the air-data system).

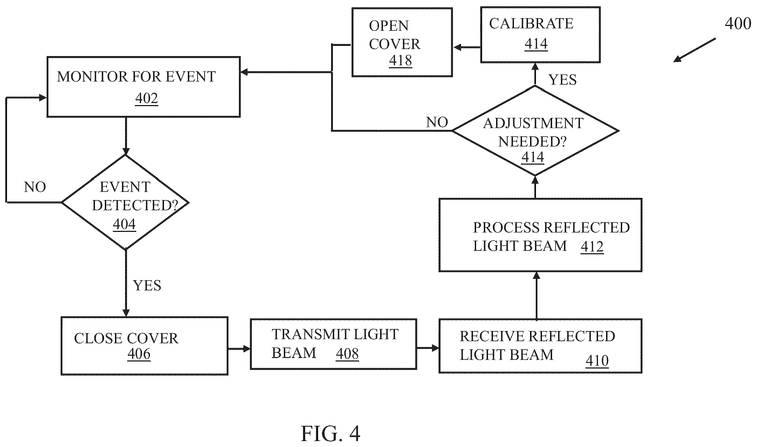

A method of calibrating an optical head 210, in an example, is shown in a calibration flow diagram 400 of Figure 4. The calibration flow diagram 400 of Figure 4 is provided as a series of sequential blocks. In one example, cover controller 102 implementing the operating instructions stored in the memory 104 enables, at least in part, the operations described in the blocks of the calibration flow diagram 400 of Figure 4. The sequence of blocks may occur in a different order or even in parallel in other embodiments. Hence, the present invention is not limited to the sequential sequence of blocks set out in Figure 4.

The calibration flow diagram 400 of Figure 4 starts at block 402 monitoring for an event. It is determined at block 404 if an event has been detected. In this example, the event is a calibration event. If it is determined that a calibration event has not been detected at block 404, the process continues at block 402 monitoring for the calibration event. If it is determined at block 404, an event has occurred that indicates a calibration of the optical head 210 should occur, cover 130 is closed to cover the window 122 at block 406 (unless it already closed). The event may be a scheduled event, or an event generated by one of the sensors 108.

Calibration is conducted starting at block 408 by transmitting light beams, generated by laser 202, from the optical transmitter 204. The transmitted light beams are reflected off of the inside surface 132 of the cover 130 and are then received by the optical receiver 208 at block 410. The reflected light beams are processed at block 412. This may be done using an interferometer that compares the transmitted light beams with the received (reflected) light beams and an optical laser controller 214. As discussed above, the optical laser controller 214 may be in communication with the cover controller 102.

It is then determined at block 414 if an adjustment is needed based on desired characteristics of the transmitted light beam. If no adjustment is need, the process continues at block 402 monitoring for a calibration event. If it is determined at block 414 that an adjustment is needed, the optical head 210 is calibrated at block 414 by adjusting an output of the laser 202. As discussed above, the adjustment may be one of adjusting power and/or frequency of the laser 202 until a desired light beam out is achieved. Once, the calibration is completed, the cover 130 may be opened at block 418 (i.e., the cover 130 is moved away from the window122) in one example. The process then continues at block 402 monitoring for a calibration event.

### EXAMPLE EMBODIMENTS

Example 1 includes a system to cover a window to an optical head of an optical air data system. The system includes a cover, actuator, and controller. The cover includes an inside surface that is configured to at least direct reflected light beams to a desired location of the optical head. The cover is configured to selectively cover the window to the optical head to the optical air data system. The actuator is engaged to move the cover to selectively cover and uncover the window. The controller controls the actuator. The controller is configured to selectively position the cover to cover at least part of the window during one of a calibration of the optical air data system as well as when a vehicle that includes the optical head is within a safety concern zone.

Example 2 includes the system of Example 1, wherein the inside surface of the cover includes a mirrored surface.

Example 3 includes the system of Example 1, wherein the inside surface of the cover includes one of a scatterer surface, a light absorbing surface, and a complex optical system.

Example 4 includes the system of any of the Examples 1-3, wherein the cover is configured to prevent transmitted light beams that are transmitted from the optical head from leaving the vehicle that includes the optical head when the cover is positioned to cover the window.

Example 5 includes the system of any of the Examples 1-4, wherein the controller is configured to control the actuator based at least in part on at least one of stored operation instructions in a memory and when the vehicle is within the safety concern zone.

Example 6 includes the system of Example 5, wherein a determination that the vehicle is within the safety concern zone is provided by at least one sensor that is configured to sense an aspect associated with the vehicle that includes the optical air data system.

Example 7 includes the system of Example 6, wherein the safety concern zone is a range in which damage to at least one of eyes and skin of individuals may occur from transmitted optical beams from the optical head.

Example 8 includes a system to operate a cover of window of a vehicle. The system includes an optical air data system, a cover and at least one controller. The optical air data system includes a laser to generate light beams and an optical head. The optical head is configured to transmit transmitted light beams and receive received light beams through the window. The cover includes an inside surface that is configured to at least in part reflect the transmitted light beams to a desired location of the optical head. The at least one controller is configured to conduct a calibration process of the optical air data system when the cover is positioned to cover the window to the optical head.

Example 9 includes the system of Example 8, further including an actuator that is engaged to move the cover to selectively cover and uncover the window. The at least one controller is configured to selectively control the actuator to position the cover to cover the window during the calibration of the optical air data system.

Example 10 includes the system of any of the Examples 8-9. wherein the optical head further includes an optical transmitter and an optical receiver. The optical transmitter is used to transmit the transmitted light beams and the optical receiver is used to receive the received light beams.

Example 11 includes the system of any examples 8-10, further including a detecting and processing system configured to detect the reflected light beams and process the reflected light beams to determine the calibration.

Example 12 includes the system of Example 11, wherein the detecting and processing system includes an interferometer. The interferometer is configured to compare the transmitted light beams with the received light beams. The at least one controller includes an air data controller. The air data controller is configured to determine if the calibration of the optical air data system is needed based on an output of the interferometer.

Example 13 includes the system of Example 12, wherein the at least one controller further includes a cover controller. The cover controller is configured to instruct the air data controller to determine if the calibration of the optical data system is needed based on at least an activation signal.

Example 14 includes the system of any of the Examples 8-13, wherein the inside surface of the cover includes a mirrored surface.

Example 15 includes the system of any of the Examples 8-14, wherein the inside surface of the cover includes one of a scatterer surface, a light absorbing surface, and a complex optical system.

Example 16 includes a method of covering a window of a vehicle. The method includes monitoring for an event that indicates one of a desire to calibrate an optical air data system and to cover the window for safety concerns; and automatically at least in part covering the window when the event has been detected that indicates one of the desire to calibrate the optical air data system and when the vehicle is within a safety concern zone.

Example 17 includes the method of Example 16, wherein when the event detected indicates a desire to calibrate the optical head. The method further includes transmitting light beams to an inside surface of the cover covering the window; processing reflected light beams that are one of reflected off of and scattered off of the inside surface of the cover; and determining if an adjustment is needed based on the processing of the reflected light beams.

Example 18 includes the method of any of the Examples 16-17, wherein when the event detected indicates the desire to cover the window because the vehicle is within the safety concern zone, the method further includes detecting the vehicle is within the safety concern zone; and automatically covering the window when the vehicle is within the safety concern zone.

Example 19 includes the method of any of the Examples 16-18, wherein when the event detected indicates the desire to cover the window because the vehicle is within the safety concern zone, the method further including detecting if the vehicle is on a ground.

Example 20 includes the method of any of the Examples 16-19, further including uncovering the window upon detecting an open event that indicates one of an activation of the optical head behind the window after a completion of the calibration and an indication the vehicle is outside the safety concern zone.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A system (100) to cover a window (122) to an optical head (208) of an optical air data system (200), the system (100) comprising:
a cover (130), the cover (130) including an inside surface (132) configured to at least direct reflected light beams (201) to a desired location of the optical head (208), the cover (130) configured to selectively cover the window (122) to the optical head (208) to the optical air data system (200);
an actuator (106) engaged to move the cover (130) to selectively cover and uncover the window (122); and
a controller (102) to control the actuator (106), the controller (106) configured to selectively position the cover (130) to cover at least part of the window (122) during one of a calibration of the optical air data system (200) as well as when a vehicle (190) that includes the optical (208) is within a safety concern zone.

2. The system of claim 1, wherein the inside surface (132) of the cover (130) includes a mirrored surface.

3. The system of claim 1, wherein the inside surface (132) of the cover (130) includes at least one of a scatterer surface, a light absorbing surface, and complex optical system.

4. The system of claim 1, wherein the cover (130) is configured to prevent transmitted light beams (203) transmitted from the optical head (210) from leaving a vehicle that includes the optical head (210) when the cover (130) is positioned to cover the window (122).

5. The system of claim 1, wherein the controller (102) is configured to control the actuator (106) based at least in part on at least one of stored operation instructions in a memory (104) and when the vehicle (190) is within the safety concern zone.

6. The system of claim 5, wherein a determination that the vehicle (190) is within the safety concern zone is provided by at least one sensor (108) that is configured to sense an aspect associated with the vehicle that includes the optical air data system (200).

7. The system of claim 6, wherein the safety concern zone is a range in which damage to at least one of eyes and skin of individuals may occur from transmitted optical beams (203) from the optical head (210).
wherein the safety event is an event that indicates the vehicle is within a range of causing damage to eyes and skin of an individual.

8. A method of covering a window (122) of a vehicle (190), the method comprising:
monitoring for an event that indicates one of a desire to calibrate an optical air data system (200) and to cover the window (122) for safety concerns; and
automatically at least in part covering the window (122) when the event has been detected that indicates one of the desire to calibrate the optical air data system (200) and when the vehicle (190) is within a safety range.

9. The method of claim 8, wherein when the event detected indicates a desire to calibrate the optical air data system (200), the method further comprising:
transmitting a light beam to an inside surface (132) of a cover (130) covering the window (122);
processing reflected light beams (201) that are one of reflected off and scattered off of the inside surface (132) of the cover (130); and
determining if an adjustment is needed based on the processing of the reflected light beams (201).

10. The method of claim 8, wherein when the event detected indicates the desire to cover the window 122 because the vehicle is within the safety concern zone where transmitted light beams (203) from the transmitter 204 will cause damage to eyes of an individual, the method further comprising:
detecting the vehicle (190) is within the safety concern zone; and
automatically covering the window ((122) when the vehicle (190) is within the safety range.
